Europäisches Patentamt

European Patent Office

Office européen des brevets

(11) Veröffentlichungsnummer: **0 411 244 A1**

# (12) EUROPÄISCHE PATENTANMELDUNG

(21) Anmeldenummer: **90105397.5**

(22) Anmeldetag: **22.03.90**

(51) Int. Cl.⁵: **C23C 8/24**, C23C 8/30, B24D 3/34

(30) Priorität: **04.08.89 DE 3925865**

(43) Veröffentlichungstag der Anmeldung: **06.02.91 Patentblatt 91/06**

(84) Benannte Vertragsstaaten:
**DE GB IT SE**

(71) Anmelder: **GOETZE AG**
**Bürgermeister-Schmidt-Strasse 17**
**D-5093 Burscheid 1(DE)**

(72) Erfinder: **Buran, Ulrich, Dipl.-Ing.**
**Neuenhaus 26a**
**D-5093 Burscheid(DE)**

(54) **Verschleissfeste Beschichtung und das Verfahren ihrer Herstellung.**

(57) Eine verschleißfeste Beschichtung auf insbesondere den Laufflächen von Kolbenringen für Verbrennungskraftmaschinen wird durch Auftragen von Metallen oder Legierungen mit insbesondere den nitridbildenden oder carbonitridbildenden Metallen Chrom, Molybdän, Wolfram, Vanadin und/oder Titan und gegebenenfalls Zusätzen an Metallverbindungen durch Umschmelzen unter Schmelzlegieren mit dem Grundwerkstoff und anschließendes Nitrieren oder Nitrocarburieren in der Salzschmelze oder aus der Gasphase hergestellt, und es wurde gefunden, daß diese Schichten außer einer verbesserten Haftung, Verschleißfestigkeit und Ausbruchsicherheit auch eine verbesserte Brandspursicherheit unter extremen Bedingungen besitzen. So beschichtete Kolbenringe können insbesondere in mittelschnell bis langsam laufenden Dieselmotoren mit hoher thermischer und Verbrennungsdruckbelastung eingesetzt werden.

EP 0 411 244 A1

## VERSCHLEISSFESTE BESCHICHTUNG UND DAS VERFAHREN IHRER HERSTELLUNG

Die Erfindung betrifft eine verschleißfeste Beschichtung auf den Laufflächen von reibendem Verschleiß ausgesetzten Maschinenteilen, wie insbesondere von Kolbenringen für Verbrennungskraftmaschinen, aus Gußeisen oder Stahl, bestehend aus einer auf die Lauffläche des Maschinenteiles aufgetragenen und anschließend durch Umschmelzen in das Maschinenteil einlegierten Beschichtung aus Metallen und/oder Metallegierungen mit gegebenenfalls Zusätzen an metallischen Verbindungen sowie das Verfahren zur Herstellung der Beschichtung.

Es ist bekannt, Laufflächen von auf reibenden Verschleiß ausgesetzten Maschinenteilen mit Verschleißschutzschichten zu versehen, die je nach Anwendungsfall bevorzugt aus galvanisch aufgetragenen Metallen oder aus in einem thermischen Spritzverfahren aufgetragenen Metallen und/oder Metallegierungen mit gegebenenfalls Hartstoffzusätzen bestehen. Thermisch aufgespritzte Metallschichten besitzen eine relativ schwache Festigkeit, und es ist daher bekannt, zur Verbesserung der Festigkeit die Metallschichten nach dem Auftrag durch beispielsweise Plasmastrahlen, Laserstrahlen, Elektronenstrahlen oder durch einen Lichtbogen umzuschmelzen, so daß sich die Spritzwerkstoffe mit dem dabei gleichzeitig im Oberflächenbereich aufgeschmolzenen Grundwerkstoff schmelzflüssig vermischen und legieren. Ebenso können Schichten direkt im Auftragsschweißverfahren aufgetragen werden, wobei der Grundwerkstoff im Oberflächenbereich gleichzeitig aufgeschmolzen wird und Mischungen und Legierungen mit dem Auftragswerkstoff bildet.

Solche umgeschmolzenen Spritz- und Auftragsschweißschichten besitzen eine verbesserte Haftung zum Grundwerkstoff, und sie sind fester und dadurch ausbruchsichererer. Beim Umschmelzlegieren entstehen allerdings inhomogene Zonen unterschiedlicher Zusammensetzung, in denen sowohl der Grundwerkstoff als auch das Schichtmaterial überwiegen kann. Bei zu hohem Grundmaterialanteil ist der Schichtverschleiß dann zu hoch, und bei geringem Grundmaterialanteil besteht bei verschiedenen Schichtkombinationen die Gefahr von Makrorißbildung, so daß solche Schichten nicht einsetzbar sind. In ersteren Fall wurde unter extremen Temperatur- und Reibungsbelastungen Adhäsiv-Verschleiß an den Schichten beobachtet, so daß es insbesondere bei Kolbenringen von mittelschnell- und langsamlaufenden Dieselmotoren mit entsprechend höherer Temperaturbelastung und entsprechend höherem Verbrennungsdruck schnell zur Brandspurbildung in den Schichten und dann zum Ausfall der Kolbenringe kommen kann.

Zur Erhöhung der Brandspursicherheit ist es bei Kolbenringen aus Gußeisen oder Stahl bekannt, die Laufflächen und gegebenenfalls die Flankenflächen zu nitrieren oder zu nitrocarburieren. Allerdings setzen solche Verfahren hochlegierte Gußeisen- und Stahlsorten voraus, aus denen Kolbenringe im Normalfall nicht bestehen. Das Nitrieren oder Nitrocarburieren wird daher bevorzugt nur an Kolbenringen aus säure- und rostbeständigen Stählen mit hohen Chromgehalten vorgenommen. Solche Stähle sind aber nur aufwendig zu nitrieren oder zu nitrocarburieren, und sie sind aufgrund des hohen Chromgehaltes relativ teuer, so daß der Einsatz solcher Kolbenringe nur im speziellen Anwendungsfällen sinnvoll ist.

Der vorliegenden Erfindung liegt daher die Aufgabe zugrunde, eine verschleißfeste Beschichtung gemäß Oberbegriff des Hauptpatentanspruches und das Verfahren der Schichtherstellung zu schaffen, welche bei guten Festigkeitswerten gleichzeitig auch ein verbessertes Brandspurverhalten aufweist.

Erfindungsgemäß wird diese Aufgabe durch eine Beschichtung gelöst, welche nach dem Auftrag auf das Maschinenteil und nach dem Umschmelzen und Einlegieren in den Maschinenteilwerkstoff nitriert oder nitrocarburiert ist. Die Beschichtungsmaterialien bestehen aus Materialien mit sowohl einer hohen Eigenverschleißfestigkeit als auch einer guten Fähigkeit zur Bildung von Nitriden und Carbonitriden unter den Nitrier- und Nitrocarburierbedingungen. Solche Werkstoffe sind Chrom, Vanadin, Molybdän, Titan und/oder Wolfram, die entweder als Einzelmetall elementar oder aus zwei und mehr untereinander gemischten oder legierten Metallen aufgetragen werden. Bevorzugt sind aber die nitrid- und carbonitridbildenden Elemente, legiert und/oder gemischt mit anderen Metallen, Metallegierungen oder -verbindungen deren Fähigkeit zur Nitrid- und Carbonitridbildung weniger ausgeprägt ist.

Zum Auftragen werden bevorzugt thermische Spritzverfahren, wie Flammspritzverfahren, Plasmaspritzverfahren oder Lichtbogenspritzverfahren, verwendet, im Sinne der Erfindung können die Auftragsmaterialien auch durch andere Auftragsverfahren, wie galvanische Verfahren, Aufdampfverfahren oder das Aufstreichen als Pasten oder Lacke, auf das Maschinenteil aufgebracht werden. Das anschließende Umschmelzen und Verschmelzen der aufgetragenen Schicht mit dem Grundwerkstoff erfolgt dann nach dem dafür üblichen Verfahren, wie durch einen Laserstrahl, einen elektrischen Lichtbogen, durch induktive Erwärmung oder Elektronenstrahlen.

Gefunden wurde dabei, daß im Auftragsschweißverfahren und im Laserspritzverfahren aufgetragene Schichten schon beim Auftragen so weit in das Grundmetall eingeschmolzen sind, daß ein anschließendes Umschmelzen nicht mehr erforderlich ist.

Das anschließende Nitrieren oder Nitrocarburieren kann sowohl durch das Salzbadnitrier- beziehungsweise -nitrocarburierverfahren als auch durch Gasnitrierbeziehungsweise -nitrocarburierverfahren erfolgen.

In Testläufen ergaben nach den beiden Verfahren nitrierte und nitrocarburierte Kolbenringe auch unter extremen Belastungen in Verbrennungskraftmaschinen ein gleich gutes Brandspurverhalten bei gleichzeitig optimaler Festigkeit und Ausbruchsicherheit sowie abrasivem Verschleiß.

Durch die Erfindung sind somit verschleißfeste Beschichtungen auf den Laufflächen von Maschinenteilen geschaffen, die neben einer hohen Verschleißfestigkeit und Ausbruchsicherheit auch ein gutes Brandspurverhalten aufweisen. Die Maschinenteile sind insbesondere als Kolbenringe in Verbrennungskraftmaschinen auch unter extremen Belastungsverhältnissen erfolgreich einsetzbar. Die mit den erfindungsgemäßen Beschichtungen versehenen Maschinenteile sind aber auch als ähnlich belastete Maschinenteile in Verbrennungskraftmaschinen einsetzbar. Da im Herstellungsverfahren mehrere bekannte, in der Beschichtungstechnik einzeln angeordnete Verfahren miteinander erfindungsgemäß kombiniert werden, ist das erfindungsgemäße Herstellungsverfahren relativ einfach und wenig aufwendig zu realisieren.

Als Beispiele werden vier Legierungen angegeben, die sich zur Herstellung der erfindungsgemäßen Beschichtungen besonders bewährt haben:

1. Legierung aus
5 bis 20 Gewichtsprozent Chrom
20 bis 60 Gewichtsprozent Kobalt
5 bis 40 Gewichtsprozent Molybdän
20 bis 60 Gewichtsprozent Eisen
1 bis 5 Gewichtsprozent Silizium.
2. Legierung aus
20 bis 40 Gewichtsprozent Vanadin
20 bis 60 Gewichtsprozent Kobalt
5 bis 30 Gewichtsprozent Molybdän
10 bis 60 Gewichtsprozent Eisen
1 bis 3 Gewichtsprozent Kohlenstoff.
3. Legierung aus
20 bis 40 Gewichtsprozent Chrom
10 bis 30 Gewichtsprozent Molybdän
10 bis 70 Gewichtsprozent Eisen.
4. Legierung aus
40 bis 90 Gewichtsprozent Chrom
10 bis 80 Gewichtsprozent Eisen
0,1 bis 5 Gewichtsprozent Kohlenstoff, wobei 10 bis 20 Gewichtsprozent des Chroms gebunden

als Chromkarbid vorliegt.

## Ansprüche

1. Verschleißfeste Beschichtung auf den Laufflächen von auf reibenden Verschleiß ausgesetzten Maschinenteilen, wie insbesondere von Kolbenringen für Verbrennungskraftmaschinen, aus Gußeisen oder Stahl, bestehend aus einer auf die Lauffläche des Maschinenteiles aufgetragenen und anschließend durch Umschmelzen in das Maschinenteil einlegierten Beschichtung aus Metallen und/oder Metallegierungen mit gegebenenfalls Zusätzen an Metallverbindungen, dadurch gekennzeichnet, daß die Beschichtung anschließend nitriert und/oder nitrocarburiert ist.
2. Verschleißfeste Beschichtung nach Anspruch 1, dadurch gekennzeichnet, daß die Beschichtungswerkstoffe zur Bildung von Nitriden und Carbonitriden fähige Metalle enthalten.
3. Verschleißfeste Beschichtung nach den Ansprüchen 1 und 2, dadurch gekennzeichnet, daß die zur Nitrid- und Carbonitridbildung fähigen Metalle aus Chrom, Vanadium, Wolfram, Molybdän und/oder Titan bestehen.
4. Verschleißfeste Beschichtung nach den Ansprüchen 1 bis 3, dadurch gekennzeichnet, daß die verschleißfeste Beschichtung durch Auftragen, Umschmelzen und Nitrieren beziehugnsweise Nitrocarburieren einer Legierung aus
5 bis 20 Gewichtsprozent Chrom
20 bis 60 Gewichtsprozent Kobalt
5 bis 40 Gewichtsprozent Molybdän
20 bis 60 Gewichtsprozent Eisen
1 bis 5 Gewichtsprozent Silizium
gebildet ist.
5. Verschleißfeste Beschichtung nach den Ansprüchen 1 bis 3, dadurch gekennzeichnet, daß die verschleißfeste Beschichtung durch Auftragen, Umschmelzen und Nitrieren beziehungsweise Nitrocarburieren einer Legierung aus
20 bis 40 Gewichtsprozent Vanadium
20 bis 60 Gewichtsprozent Kobalt
5 bis 30 Gewichtsprozent Molybdän
10 bis 60 Gewichtsprozent Eisen
1 bis 3 Gewichtsprozent Kohlenstoff
gebildet ist.
6. Verschleißfeste Beschichtung nach den Ansprüchen 1 bis 3, dadurch gekennzeichnet, daß die verschleißfeste Beschichtung durch Auftragen, Umschmelzen und Nitrieren beziehungsweise Nitrocarburieren einer Legierung aus
20 bis 40 Gewichtsprozent Chrom
10 bis 30 Gewichtsprozent Molybdän
10 bis 70 Gewichtsprozent Eisen
gebildet ist.
7. Verschleißfeste Beschichtung nach denAnsprü-

chen 1 bis 3, dadurch gekennzeichnet, daß die verschleißfeste Beschichtung durch Auftragen, Umschmelzen und Nitrieren beziehungsweise Nitrocarburieren einer Legierung aus

40 bis 90 Gewichtsprozent Chrom
10 bis 80 Gewichtsprozent Eisen
0,1 bis 5 Gewichtsprozent Kohlenstoff
gebildet ist, wobei etwa 10 bis 20 Gewichtsprozent Chrom als Chromkarbid vorliegt.

8. Verfahren zur Herstellung der verschleißfesten Beschichtung nach den Ansprüchen 1 bis 7, dadurch gekennzeichnet, daß die verschleißfeste Beschichtung nach dem Auftrag und dem Umschmelzen in der galvanischen Salzschmelze oder in der Gasphase nitriert oder nitrocarbriert wird.

Europäisches Patentamt

**EUROPÄISCHER RECHERCHENBERICHT**

Nummer der Anmeldung

EP 90105397.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ⁵) |
|---|---|---|---|
| A | <u>US - A - 4 119 443</u><br>(ABE et al.)<br>   * Beispiele; Ansprüche *<br>     -- | 1-3 | C 23 C 8/24<br>C 23 C 8/30<br>B 24 D 3/34 |
| A | <u>GB - A - 2 156 863</u><br>(UNITED KINGDOM ATOMIN ENERGY)<br>   * Gesamt *<br>     -- | 1-3 | |
| A | <u>DE - A1 - 2 717 842</u><br>(FRIED KRUPP)<br>   * Anspruch 1 *<br>     ---- | 1-3 | |

| RECHERCHIERTE SACHGEBIETE (Int Cl ⁵) |
|---|
| C 23 C<br>B 24 D |

Der vorliegende Recherchenbericht wurde für alle Patentansprüche erstellt.

| Recherchenort | Abschlußdatum der Recherche | Prüfer |
|---|---|---|
| WIEN | 08-11-1990 | WILFLINGER |